# EUROPEAN PATENT SPECIFICATION

(11) **EP 1 847 349 B1**
(45) Date of publication and mention of the grant of the patent: **23.12.2009**
(21) Application number: 07106241.8
(22) Date of filing: 25.03.1999
(51) Int. Cl.: B23K 11/14

(54) **An arrangement for formation of a projection welding connection for metal sheet**
Anordnung zur Herstellung einer Buckelschweissverbindung zwischen Blechteilen
Agencement pour relier des tôles par soudure par projection

(43) Date of publication of application: 24.10.2007
(62) Divisional of application: 99200938.1
(73) Proprietor: AL-S Technology B.V., 3800 AP Amersfoort (NL)
(72) Inventor: Jansen Bramervaer, Tom, 2596 BT, The Hague (NL)
(74) Representative: van Assen, Jan Willem Bernard

(56) References cited:
- WO-A-99/03634
- DE-U- 1 848 297
- US-A- 4 417 122
- US-A- 4 427 869
- US-A- 4 461 943
- E.A. OTTO: "Buckelschweissen verkürzt Stückzeiten" SCHWEISSEN UND SCHNEIDEN, vol. 13, no. H.4, 1961, pages 146-151, XP002112398 DE

## Description

The invention relates to an arrangment for manufacturing a projection weld connection for plate material of electrically conductive material in which method in one of the plates to be welded a projection of triangular cross-section is to be preformed.

WO 99/03634 shows a device for welding electrically conductive plate material having two pressure units.

The object of the invention is to melt said projections during welding in such a way, that on the opposite side no traces are formed and is unblemished.

This is solved by an arrangment according to the claim.

The invention will be further elucidated referring to the accompanying drawing.
Fig. 1 Shows a plan view of a lower plate part provided with a projection.
Fig. 2 Shows a cross section over the line II-II in fig.1.
Fig. 3 Shows a cross section similar to fig. 2 of the projection weld connection before welding with a rush of current.

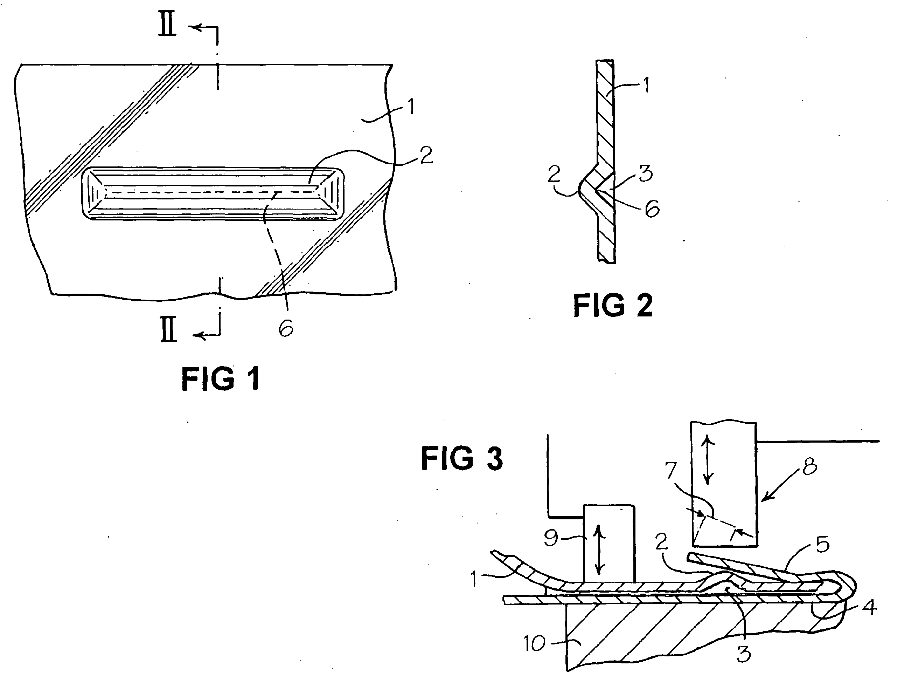

According to the drawing in fig. 1 and fig. 2 an oblong projection (2) has been manufactured during a preliminary operation in the underlying inner plate (1) by pressing a hollow (3) in the material from the lower side by means of a (not shown) pressing tool.

In fig. 3 a cross section shows the starting position of a projection weld connection, in which the upper lying outer plate (5) rests on the projection (2) and is thereafter folded around the underlying inner plate (1). The assembly is thereafter compressed in this position by means of a first pressure unit (8) which is electrically connected with a (not shown) current source by which a rush of current can be applied to the upper lying plate (5).
A second pressure unit (9) rests on the under lying inner plate part (1) by which the current can be removed. By the application of the rush of current under simultaneous pressure of the pressure unit (8) the connection comes about.
Preferably a jig or form receiver (10) is present below the plate (4) for taking up the pressure force.
The tool for forming the hollow (3) in the inner plate (1) has on the pressure side an elevation (6) of preferably 1.4 - 10 mm at the base and such a height, that the projection (2) extends from 0.6 - 0.8 mm above the plate.
The height can vary with the thickness from the plate which is preferably 0.7 mm. The elevation is bevelled at the ends under a sharp angle of preferably 45 degrees. The pressure unit (8) (not shown) is executed in such a way that the pressure force can be adjusted between 300 and 1800 Newton, preferably between 500 and 1100 Newton.

The place of the tool for forming the projection (2) is indicated in fig. 1 with (6). The edge (5) will be executed with an overhang (7) of minimally 1 millimetre, counted from the heart of the projection (2) until the outside of the edge of the upperlying plate part (5).

For obtaining an optimal result with which no traces of the projection weld connection can be seen on the outer plate, it is necessary to arrange the current supply in such a way, that a rush of current from 15.000 - 50.000 ampere during 1 - 10 milliseconds is delivered.

## Claims

1. An arrangement for manufacturing a projection weld connection for plate material of electrically conductive material, having in combination:
- means for pressing a hollow (3) into one of the plates to be welded comprising a pressure tool (6) having an elevation on the surface with a length of 10 mm and a breadth of 1,4 mm and a height of 0,6 to 0,8 mm, adapted to form a projection (2) of triangular cross section and oblong elevation (6) having at its base a size of 1,4 by 10 mm and extending from 0,6 to 0,8 mm above the plate (1),
- means for welding plates (4,1) that are placed in a juxtaposition, wherein a first plate is provided with a folded plate edge (5) having an overhang (7) of minimally 1,0 millimeters, calculated from the centre of the projection (3) to the end of the edge of the upper lying first plate part (5) and wherein a second plate (1) to be welded has a projection preformed using said pressing means, the means for welding comprising:
- a first pressure unit (8) on one side of the plates (1,4) to be welded,
- an electrical device for applying a rush of current of about 15,000 - 50,000 Amperes for 1 to 10 milliseconds from the side of the first pressure unit to the upper lying part of the first plate at the location of the projection,
- the first pressure unit (8) adapted to compress the plates to be welded with a force of between 300 and 1800 Newton applied on the pressure unit (8) and provided with a current supplying element,
- a second pressure unit (9) adapted to be pressed simultaneously on the second plate (1) provided with a current removing element to remove the current from the second plate (1), and
- a form receiver or jig (10) below the plates (4) for directly absorbing the pressure forces of the first and second pressure units (8) and (9).

## Patentansprüche

1. Anordnung zur Herstellung einer Buckelschweißverbindung für Plattenmaterial aus elektrisch leitfähigem Material, die in Kombination aufweist:
- eine Einrichtung zum Pressen einer Höhlung (3) in eine von den zu schweißenden Platten, die ein Druckwerkzeug (6) umfasst, das eine Erhöhung mit einer Länge von 10 mm und einer Breite von 1,4 mm und einer Höhe von 0,6 bis 0,8 mm auf der Oberfläche aufweist, das angepasst ist, um einen Buckel (2) von dreiecksförmigem Querschnitt und länglicher Erhöhung (6) zu bilden, der an seiner Basis eine Abmessung von 1,4 mal 10 mm aufweist und sich zwischen 0,6 und 0,8 mm über der Platte (1) erstreckt,
- eine Einrichtung zum Schweißen von Platten (4,1), die in einer Nebeneinanderanordnung platziert sind, wobei eine erste Platte mit einem umgebogenen Rand (5) versehen ist, der einen Überhang (7) von minimal 1,0 Millimetern aufweist, berechnet von der Mitte des Buckels (3) bis zum Ende des Randes des obenliegenden ersten Plattenteils (5), und wobei eine zweite zu schweißende Platte (1) einen Buckel aufweist, der unter Verwendung der Presseinrichtung vorgeformt ist, wobei die Einrichtung zum Schweißen umfasst:
- eine erste Druckeinheit (8) auf einer Seite der zu schweißenden Platten (1,4),
- ein elektrisches Gerät zur Ausübung eines Stromstoßes von etwa 15000-50000 Ampere für 1 bis 10 Millisekunden von der Seite der ersten Druckeinheit zu dem obenliegenden Teil der ersten Platte an der Stelle des Buckels,
- wobei die erste Druckeinheit (8) angepasst ist, um die zu schweißenden Platten mit einer auf die Druckeinheit (8) ausgeübten Kraft von zwischen 300 und 1800 Newton zusammenzudrücken, und mit einem Stromversorgungselement versehen ist,
- eine zweite Druckeinheit (9), die angepasst ist, um gleichzeitig auf die zweite Platte (1) gepresst zu werden, die mit einem Stromableitelement versehen ist, um den Strom von der zweiten Platte (1) abzuleiten, und
- eine Formaufnahme- oder Spannvorrichtung (10) unter den Platten (4) zur direkten Absorption der Druckkräfte der ersten und zweiten Druckeinheit (8) und (9).

## Revendications

1. Agencement de fabrication d'un assemblage, par soudage à bossages, pour des éléments de tôle de matière électriquement conductrice, qui inclut sous forme combinée:
un moyen de compression pour former une cavité (3) dans l'une des tôles à souder, comprenant un outil de compression (6) comportant sur sa surface une saillie d'une longueur de 10 mm, d'une largeur de 1,4 mm et d'une hauteur de 0,6 à 0,8 mm, apte à former un bossage (2) de section transversale triangulaire dont la saillie oblongue (6), d'une dimension de 1,4 par 10 mm à sa base, s'étend de 0,6 à 0,8 mm au dessus de la tôle (1),
un moyen de soudage de tôles (4, 1) qui sont placées en juxtaposition, dans lequel une première tôle comporte un bord plié (5) de tôle à surplomb (7) d'au moins 1,0 millimètre, calculé à partir du centre du bossage (3) jusqu'à l'extrémité du bord de la partie supérieure (5) de la première tôle, et dans lequel une deuxième tôle (1) à souder comprend un bossage préformé en utilisant ledit moyen de compression, le moyen de soudage comprenant:
- une première unité de compression (8) située sur l'un des cotés des tôles (1, 4) à souder,
- un dispositif électrique pour appliquer sur la partie supérieure de la première tôle, à partir du coté de la première unité de compression, une impulsion de courant d'environ 15.000 à 50.000 ampères pendant 1 à 10 millisecondes à l'emplacement du bossage,
- la première unité de compression (8) étant apte à comprimer les tôles à souder, sous une force comprise entre 300 et 1.800 Newtons appliquée à l'unité de compression (8), et comportant un élément d'amenée de courant,
- une deuxième unité de compression (9) apte à être comprimée simultanément sur la deuxième tôle (1) à souder, et comportant un élément de sortie de courant pour la sortie du courant à partir de la deuxième tôle (1), et
- un gabarit ou récepteur conformé (10) situé au dessous des tôles (4) pour absorber directement les forces de compression des première et deuxième unités de compression (8) et (9).
